# EUROPEAN PATENT SPECIFICATION

(11) **EP 0 868 084 B1**
(45) Date of publication and mention of the grant of the patent: **27.11.2002**
(21) Application number: 98302236.9
(22) Date of filing: 25.03.1998
(51) Int. Cl.: H04N 7/30

(54) **Adaptive video signal compression**
Adaptive Videosignalkompression
Compression de signaux vidéo adaptive

(30) Priority: 27.03.1997 GB 9706394
(43) Date of publication of application: 30.09.1998
(73) Proprietor: Tandberg Television ASA, 1326 Lysaker (NO)
(72) Inventor: Bock, Alois Martin, Eastleigh, Hampshire, SO50 4PF (GB); Jordon, John Paul, Bournemouth, Dorset, BH8 8NU (GB)
(74) Representative: Molyneaux, Martyn William

(56) References cited:
- EP-A- 0 345 608
- EP-A- 0 498 656
- EP-A- 0 509 576
- WO-A-96/38006
- US-A- 5 301 242
- US-A- 5 598 213

## Description

This invention relates to improvements in compressing digital signals, particularly in buffer management prior to transmission.

In the field of digital transmission of data, including broadcasting, it is desirable to compress the data prior to transmission in order to reduce the required bandwidth. Standardising the characteristics of the compressed signal means that the transmitted signal can be received and decompressed by all users in a known manner. One such standard is ISO/IEC 13818, also known as MPEG-2.

A video signal is compressed by removing any spatial or temporal redundancy in the signal, i.e. eliminating any predictability in the source signal. The predictability of a video signal is highly dependent on the image content and so the bit-rate of the compressed signal varies according to the criticality of the image. Criticality is an indication of how difficult an image is to compress.

The compression takes place in an encoder wherein the compressed signal is passed to a buffer prior to transmission. This buffer is used to accommodate a certain amount of bit-rate variation of the compressed signal. The transmitted video signal is received and subsequently passed to a decoder which also contains a buffer to store the compressed signal prior to decompression.

The MPEG-2 standard defines a number of subsets of the syntax and semantics which also define the decoder capabilities required to decode a particular bit-stream. A profile is a defined sub-set of the entire bit-stream syntax that is defined by this MPEG-2 specification. A level is a defined set of constraints imposed on parameters in the bit-stream.

Vital to the delivery of uninterrupted decoded video is the prevention of decoder buffer overflow or underflow. MPEG-2 Main Profile at Main Level (MP@ML) defines a decoder buffer size of 1.8 Mbits, and typically an encoder design will include an encoder buffer of at least the same size. The two buffers form a complementary pair where the total amount of data contained remains constant. This arrangement allows the decoder buffer occupancy to be determined from the encoder buffer and the maintenance of the decoder buffer occupancy can be achieved by ensuring the encoder buffer occupancy remains within the 1.8 Mbit range.

One method for keeping the encoder buffer occupancy within predetermined limits, as disclosed in EP-A-0498656, involves deriving a Quantisation parameter (Qp) from the buffer occupancy. Qp controls the amount of quantisation applied to the video signal and hence varies the compression. In broad terms, the higher the encoder buffer occupancy, the higher the Qp applied. This has the effect of limiting the input bit-rate into the buffer allowing the buffer occupancy to decrease. In order to correctly decompress the received signal, the decoder must know the level of quantisation applied at the encoder. To achieve this, Qp is inserted into the signal and subsequently used by the decoder. The MPEG-2 standard defines the maximum allowable value of Qp that can be sent to a decoder as 31.

This method performs well under most conditions. However, where a significant mismatch exists between the output bit-rate from the encoder buffer and the input bit-rate required to compress a critical video signal, the maximum allowable quantisation may be insufficient to adequately reduce the data rate produced by the compression process. This may lead to encoder buffer overflow and hence decoder buffer underflow.

Accordingly, one object of the present invention is to provide a method and apparatus for improving the management of data within the encoder and decoder buffers.

According to a first aspect of the present invention, there is provided a method as claimed in claim 1 herein.

According to a second aspect of the present invention, there is provided an apparatus as claimed in claim 4 herein.

Reference will now be made, by way of example, to the accompanying drawings, in which:
Figure 1 is a schematic diagram of a broadcasting system according to the present invention; and
Figure 2 is a diagram showing an encoder included in the broadcasting system of Figure 1.

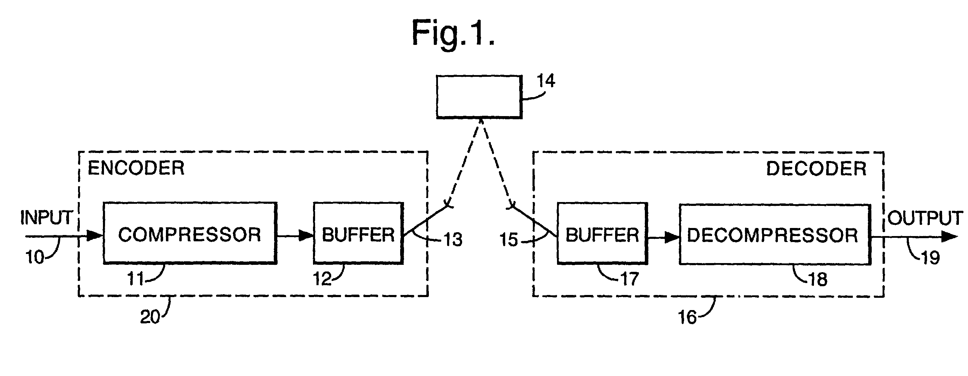

A broadcast system is illustrated in Figure 1 and includes an encoder 20 and a decoder 16. An input signal 10, such as a video signal is fed to the encoder 20 comprising a compressor 11 and a buffer 12. The video signal 10 is compressed by compressor 11 and passed through the buffer 12 to produce a compressed output digital signal 13. The compressed signal is then transmitted to a receiver 15 where it is subsequently input to a decoder 16 wherein the compressed signal is passed through a buffer 17 before entering the decompressor 18 which produces an uncompressed video signal 19.

In Figure 1, the transmission from the encoder 20 to the decoder 16 is via a satellite 14, although other means of transmission could also be used such as a cable, terrestrial or data broadcasting network. The buffer 12 in the encoder 20 is required to accommodate the bit-rate variation caused by the compression process and the decoder buffer 17 stores the received compressed data until it is required by the decompressor 18.

An MPEG-2 decoder buffer at Main Profile at Main Level (MP@ML) is limited to 1.8 Mbits. The encoder and decoder buffers, 12 and 17 respectively, form a complementary pair where the total amount of data contained remains constant. The maintenance of the decoder buffer occupancy can therefore be achieved by ensuring the encoder buffer occupancy remains within the 1.8 Mbit range.

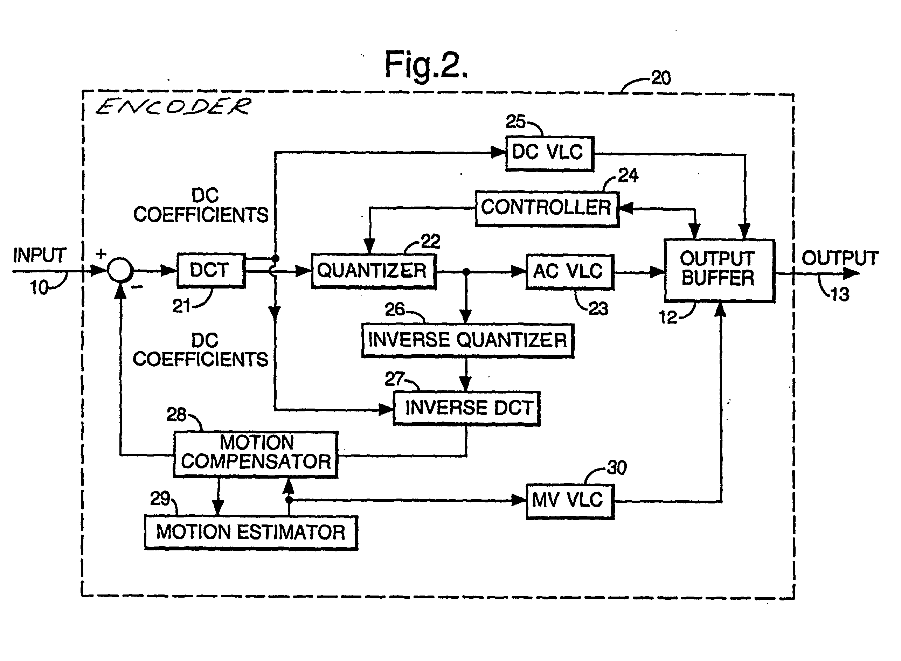

Figure 2 shows a simplified block diagram of an example implementation of the proposed method to improve the management of data in the encoder, in particular to avoid buffer overflow. The video input signal 10 is fed via a subtractor to a forward DCT block 21. After DCT transformation, the signal is split into two paths: the DC coefficients and the AC coefficients. The DC coefficients are fed directly to a DC variable length coder 25 and to an inverse DCT block 27. The AC coefficients are fed to a quantiser 22 before being fed to an AC variable length coder 23 and to an inverse quantiser 26. After inverse quantisation, the AC coefficients are combined with the DC coefficients in the inverse DCT block to generate a reconstructed image for use in the motion compensator 28 and motion estimator 29. The motion compensator 28 passes a motion compensated image to the subtractor to aid in the temporal compression of subsequent images. The motion estimator 29 generates motion vectors which are passed to the motion vector variable length coder 30. The outputs of the DC, AC and motion vector variable length coders, 25, 23 and 30 respectively, are merged to form the input of the encoder buffer 12.

One method for maintaining the encoder buffer occupancy within limits, derives the Quantisation parameter (Qp) in the controller 24 from the buffer occupancy. This value of Qp is used to control the quantiser 22, and is inserted into the compressed output signal 13 for subsequent use at the decoder. In MPEG-2 the maximum allowable value of Qp in the decoder is 31. However, it is sometimes the case that this value is insufficient in the encoder to avoid buffer overflow.

It is important that an MPEG compliant data-stream is maintained at all times. Failure to do this will result in a breakdown in the decoding process and lead to picture degradation or even complete picture loss. Allowing buffer overflow or underflow results in a data-stream which is not MPEG compliant.

This invention is concerned with preventing the occurrence of this rate control problem and therefore ensuring that the data-stream produced is always completely MPEG compliant. The controller 24 detects when the output buffer 12 is approaching overflow. The controller generates a value of Qp that exceeds the maximum allowable limit and applies this to the quantiser 22. This further reduces the data rate by quantising to zero more DCT AC coefficients beyond that which would otherwise have been possible. This value of Qp, although not part of the MPEG-2 specification, is restricted to the encoder and is represented in the output signal 13 within a predetermined range having an upper limit. Compliance to the MPEG-2 standard is achieved by representing the maximum compliant value of Qp in the output signal 13. Furthermore, this compliant value of Qp is used in the inverse quantiser 26. This ensures that the motion compensation is based on the DCT coefficients produced by the decoder.

The result of this 'over-quantising' has no real visual impact on a decoder. As the value of Qp reaches its upper limit, the quantisation becomes noticeably coarse and will become visible to the viewer. The decoder is told that the 'over-quantised' signal was actually quantised at a lower level, and will therefore reverse quantise the signal according to the level indicated in the data-stream. The decoder will obviously not be able to faithfully reverse quantise the 'over-quantised' signal, and this will result in further degradation of the image. However, the visual effect of this is unlikely to be more noticeable than an already heavily quantised picture.

The present invention has particular application in dealing with extreme situations which would normally result in buffer overflow and a non-MPEG compliant stream. In these extreme situations picture degradation is not a major concern, although keeping the data-stream MPEG compliant is of utmost importance.

In extreme circumstances the previous method may still prove inadequate in reducing the data flow into the output buffer 12. This situation is detected by the controller 24 which forces all the AC coefficients to zero in the quantiser 22.

Using the proposed methods of buffer management, the encoder can react to rapid changes in the image criticality and avoid encoder buffer overflow.

## Claims

1. A method of compressing an input digital signal (10) in accordance with a compression standard based on discrete cosine transform followed by quantisation to produce a compressed output digital signal (13) in which a quantisation parameter (Qp) is represented, said quantisation parameter being variable in accordance with said standard within a predetermined range having an upper limit; **characterized by** including the step of compressing (22) the input digital signal by applying a quantisation parameter beyond the upper limit and representing in the output digital signal that the quantisation parameter is within the predetermined range.

2. A method as claimed in claim 1, including the further step of buffering the compressed output digital signal by use of a buffer (12), and varying the quantisation parameter to control the occupancy of the buffer.

3. A method as claimed in claim 1 or 2 including the step of forcing the discrete cosine transfom coefficients to a zero value to contain the data rate of the compressed output digital signal within the capacity of the buffer.

4. Apparatus for compressing an input digital signal (10) in accordance with a compression standard based on discrete cosine transform to produce a compressed output digital signal (13), in which a quantisation parameter (Qp) is represented, said quantisation parameter being variable in accordance with said standard within a predetermined range having an upper limit, **characterised by** a controller (24) to control a compressor (22) to compress the input digital signal by applying a quantisation parameter beyond the upper limit set by said compression standard and representing in the output digital signal that the quantisation parameter is within the predetermined range.

5. Apparatus as claimed in claim 4, including a buffer (12) to buffer the compressed output digital signal, the controller (24) being adapted to control the quantisation parameter to control the occupancy of the buffer.

6. Apparatus as claimed in claim 5, wherein the controller (24) is adapted to force the discrete cosine transform coefficients to zero to contain the data rate of the compressed signal within said buffer.

7. A method of transmitting a signal compressed according to the method of any of claims 1 to 3, comprising the further step of reverse quantising (18) the signal at a decoder (16) according to the quantisation parameter represented in the compressed digital signal.

## Patentansprüche

1. Verfahren zum Komprimieren eines digitalen Eingangssignals (10) gemäß einem Komprimierungsstandard auf der Basis einer diskreten Cosinustransformation, gefolgt von einer Quantisierung, um ein komprimiertes digitales Ausgangssignal (13) zu erzeugen, in dem ein Quantisierungsparameter (Qp) dargestellt wird, wobei der Quantisierungsparameter gemäß dem Standard innerhalb eines vorbestimmten Bereichs mit einer oberen Grenze variabel ist; **dadurch gekennzeichnet, daß** es den Schritt des Komprimierens (22) des digitalen Eingangssignals durch Anwenden eines Quantisierungsparameters jenseits der oberen Grenze und des Darstellens im digitalen Ausgangssignal, daß der Quantisierungsparameter innerhalb des vorbestimmten Bereichs liegt, umfaßt.

2. Verfahren nach Anspruch 1, einschließlich des weiteren Schritts des Pufferns des komprimierten digitalen Ausgangssignals durch die Verwendung eines Puffers (12) und des Verändems des Quantisierungsparameters, um die Belegung des Puffers zu steuern.

3. Verfahren nach Anspruch 1 oder 2, einschließlich des Schritts des Bringens der Koeffizienten der diskreten Cosinustransformation auf einen Nullwert, um die Datenrate des komprimierten digitalen Ausgangssignals innerhalb der Kapazität des Puffers zu halten.

4. Vorrichtung zum Komprimieren eines digitalen Eingangssignals (10) gemäß einem Komprimierungsstandard auf der Basis einer diskreten Cosinustransformation, um ein komprimiertes digitales Ausgangssignal (13) zu erzeugen, in dem ein Quantisierungsparameter (Qp) dargestellt wird, wobei der Quantisierungsparameter gemäß dem Standard innerhalb eines vorbestimmten Bereichs mit einer oberen Grenze variabel ist, **gekennzeichnet durch** eine Steuereinheit (24) zum Steuern eines Datenverdichters (22) zum Komprimieren des digitalen Eingangssignals **durch** Anwenden eines Quantisierungsparameters jenseits der oberen Grenze, die vom Komprimierungsstandard festgelegt wird, und zum Darstellen im digitalen Ausgangssignal, daß der Quantisierungsparameter innerhalb des vorbestimmten Bereichs liegt.

5. Vorrichtung nach Anspruch 4 mit einem Puffer (12) zum Puffern des komprimierten digitalen Ausgangssignals, wobei die Steuereinheit (24) dazu ausgelegt ist, den Quantisierungsparameter zu steuern, um die Belegung des Puffers zu steuem.

6. Vorrichtung nach Anspruch 5, wobei die Steuereinheit (24) dazu ausgelegt ist, die Koeffizienten der diskreten Cosinustransformation auf Null zu bringen, um die Datenrate des komprimierten Signals innerhalb des Puffers zu halten.

7. Verfahren zum Übertragen eines gemäß dem Verfahren nach einem der Ansprüche 1 bis 3 komprimierten Signals mit dem weiteren Schritt der Umkehrquantisierung (18) des Signals an einem Decodierer (16) gemäß dem im komprimierten digitalen Signal dargestellten Quantisierungsparameter.

## Revendications

1. Procédé de compression d'un signal numérique d'entrée (10) selon une norme de compression basée sur une transformée cosinusoidale discrète suivie d'une quantification discrète afin de produire un signal numérique de sortie compressé (13) dans lequel est représenté un paramètre de quantification (Qp), ledit paramètre de quantification étant variable en fonction de ladite norme à l'intérieur d'une plage prédéterminée possédant une limite supérieure ; **caractérisé en ce qu'**il comprend une étape consistant à compresser (22) le signal numérique d'entrée en appliquant un paramètre de quantification au-delà de la limite supérieure et représentant dans le signal numérique de sortie que le paramètre de quantification est compris dans la plage prédéterminée.

2. Procédé selon la revendication 1, comprenant une étape supplémentaire consistant à mettre en mémoire tampon le signal numérique de sortie compressé à l'aide d'une mémoire tampon (12), et à varier le paramètre de quantification afin de contrôler l'encombrement de la mémoire tampon.

3. Procédé selon la revendication 1 ou 2 comprenant une étape consistant à forcer les coefficients de la transformée cosinusoidale discrète à une valeur de zéro pour contenir le débit de données du signal numérique de sortie compressé dans la capacité de la mémoire tampon.

4. Appareil permettant de compresser un signal numérique d'entrée (10) selon une norme de compression basée sur une transformée cosinusoidale discrète afin de produire un signal numérique de sortie compressé (13), dans lequel est représenté un paramètre de quantification (Qp), ledit paramètre de quantification étant variable en fonction de ladite norme à l'intérieur d'une plage prédéterminée possédant une limite supérieure, **caractérisé par** une unité de contrôle (24) permettant de contrôler un compresseur (22) qui compresse le signal numérique d'entrée en appliquant un paramètre de quantification au-delà de la limite supérieure définie par ladite norme de compression et représentant dans le signal numérique de sortie que le paramètre de quantification est compris dans la plage prédéterminée.

5. Appareil selon la revendication 4, comprenant une mémoire tampon (12) pour stocker le signal numérique de sortie compressé, l'unité de contrôle (24) étant conçue pour contrôler le paramètre de quantification afin de surveiller l'encombrement de la mémoire tampon.

6. Appareil selon la revendication 5, dans lequel l'unité de contrôle (24) est conçu pour forcer les coefficients de transformée cosinusoidale discrète à zéro pour contenir le débit de données du signal compressé dans ladite mémoire tampon.

7. Procédé de transmission d'un signal compressé selon le procédé de l'une des revendications 1 à 3, comprenant en outre une étape de quantification inverse (18) du signal au niveau d'un décodeur (16) en fonction du paramètre de quantification représenté dans le signal numérique compressé.
